# EUROPÄISCHE PATENTSCHRIFT

(11) **EP 0 264 474 B1**
(45) Veröffentlichungstag und Bekanntmachung des Hinweises auf die Patenterteilung: **31.03.1993**
(21) Anmeldenummer: 86114599.3
(22) Anmeldetag: 21.10.1986
(51) Int. Cl.: B23D 37/00

(54) **Verfahren und Maschine zum Drehräumen von rotationssymmetrischen Werkstücken**
Method of and machine for turn-broaching workpieces with rotational symmetry
Procédé de, et machine pour le brochage par rotation de pièces à symétrie de révolution

(43) Veröffentlichungstag der Anmeldung: 27.04.1988
(73) Patentinhaber: Wilhelm Hegenscheidt Gesellschaft mbH, D-41804 Erkelenz (DE)
(72) Erfinder: Berstein, Garri, Dr.-Ing., D-5410 Erkelenz (DE); Obrig, Hans W., Dr.-Ing., D-4300 Essen (DE); Wittkopp, Helmut, Dipl.-Ing., D-5140 Erkelenz (DE); Wolters, Hermann, Dipl.-Ing., D-4050 Mönchengladbach 4 (DE)
(74) Vertreter: Aubele, Karl B.

(56) Entgegenhaltungen:
- EP-A- 0 096 414
- DE-A- 3 340 830
- US-A- 1 579 888
- US-A- 2 173 609
- US-A- 2 468 745
- PATENT ABSTRACTS OF JAPAN, Band 7, Nr. 279 (M-262)[1424], 13. Dezember 1983; & JP - A - 58 155 125 (HITACHI SEISAKUSHO K.K.) 14.09.1983
- MASCHINENMARKT, Band 92, Nr. 34, August 1986, Seiten 24-28, Würzburg; M. MÜLLER et al.: "Zerspankraft kompensieren"

## Beschreibung

Vorliegende Erfindung betrifft das Brehräumen gemäß EP 02 112 216 A1, die zum Stand der Technik nach. Art. 54(3) EPÜ gehört. Bei diesen Maschinen sind in sich gegenüberliegender Anordnung zwei Werkstückspindeln in Spindelstöcken drehantreibbar gelagert. Zur Bearbeitung des Werkstückes sind Schneidelemente vorgesehen, die sich auf einem Werkzeugträger auf gekrümmter Bahn befinden und vom Werkzeugträger gedreht, also auf gekrümmter Bahn bewegt werden können. Die Werkzeugträger sind in gesonderten Gehäusen drehantreibbar gelagert, wobei diese Gehäuse je auf Schlitten für eine radiale Zustellung angeordnet sind. Die Spindelstöcke sind unverschiebbar, so daß die Art der Werkstückaufnahme nicht erkannt werden kann. Bei dieser Anordnung entstehen hohe Nebenzeiten, weil nur im werkzeugfreien Bereich das Werkstück gewechselt werden kann und daher der werkzeugfreie Bereich genügend lange für den Werkstückwechsel beibehalten werden muß. Die Werkzeuge müssen durch radiales Zurückfahren außer Eingriff gebracht werden. Nach dem Werkstückwechsel müssen die Werkzeuge wieder radial positioniert und während des Eingriffs radial im Vorschub bewegt werden. Eine Einsparung von Nebenzeiten ist bei einer solchen Anordnung nicht möglich.

Dem gegenüber liegt der Erfindung die Aufgabe zugrunde, eine Maschine der eingangs beschriebenen Art vorzuschlagen, bei deren Anwendung die Nebenzeiten verringert werden können. Weiterhin soll ein einfacherer Maschinenaufbau möglich werden.

Zur Lösung dieser Aufgabe ist eine Maschine vorgeschlagen für eine Drehräumbearbeitung mit einer um eine Maschinenachse drehantreibbaren Werkstückspindel und einem beweglichen Werkzeugträger mit daran angeordneten Schneidkanten, wobei der Werkzeugträger eine Bewegung der Schneidkanten auf gekrümmter Bahn ermöglicht und wobei auf einem Maschinenbett angeordnet mindestens zwei Spindelstöcke in sich gegenüberliegender Anordnung und mit gemeinsamer Mittellinie der Werkstückspindeln sowie mindestens ein weiterer Spindelstock für den beweglichen Werkzeugträger, in dem der Werkzeugträger drehantreibbar gelagert ist, vorgesehen sind, wobei die Mittellinie jedes Werkzeugträgers parallel zur Mittellinie der Werkstückspindeln verläuft wobei jeder Spindelstock für einen Werkzeugträger mindestens parallel zur Mittellinie der Werkstückspindeln verschiebbar und positionierbar angeordnet ist und wobei die Maschine Mittel aufweist, die eine Winkellage des Werkzeugträgers für den Arbeitsbeginn und eine Winkellage des Werkzeugträgers für die Entnahme erfassen, wobei in der Winkellage für die Entnahme eine von Schneidkanten freie Zone dem Werkstück zugewandt ist, und die Steuersignale für die Be- und Entladung und mindestens den Arbeitsbeginn an die Maschinensteuerung weiterleiten. Hierdurch wird es möglich z.B. ohne Unterbrechung der Bewegung des Werkzeuges, jedoch nach der Bearbeitung durch die letzte Schneidkante im Bereich einer nachfolgenden, von Schneidkanten freien Zone des Werkzeuges, das Werkstück in radialer Richtung zu wechseln. Dies bedeutet, daß die Drehbewegung des Räumwerkzeuges dann, wenn die letzte Schneidkante des Räumwerkzeuges die Fertigbearbeitung des Werkstückes beendet hat, unverändert beibehalten werden kann, daß sich jedoch dieser letzten Schneidkante ein schneidkantenfreier Bereich am Werkzeug anschließt, so daß in diesem schneidkantenfreien Bereich ohne Radialbewegung des Werkzeuges das Werkstück gewechselt werden kann. Mit modernen Zuführeinrichtungen kann ein solcher Werkstückwechsel von kleineren Wellen oder z. B. Kurbelwellen von Kfz-Motoren in wenigen Sekunden durchgeführt werden. Die Lücke im Werkzeug kann so bemessen sein, daß unmittelbar nach Beendigung des Werkstück wechselvorgangs die erste Schneide wieder am Beginn des Arbeitsprozesses steht und damit am Werkstück die Bearbeitung beginnt. Auf diese Art und Weise sind Rückhubzeiten oder Leerzeiten, um das Werkzeug in Arbeitsposition zu bringen, minimierbar bzw. vollständig vermeidbar. Ändert sich die axiale Lage der Bearbeitungsstelle am Werkstück und/oder auch der Durchmesser an der zu bearbeitenden Stelle, so kann das Werkzeug während des Werkstückwechsels neu positioniert werden, so daß auch hier Nebenzeiten wegfallen.

Es ist auch möglich, daß nach der Bearbeitung des Werkstückes durch die letzte Schneidkante das Werkzeug in gleicher Bewegungsrichtung in eine Werkstückwechselposition gedreht und für den Zeitraum des Werkstückwechsels die Drehung gestoppt wird. Auch hierdurch werden die bereits beschriebenen Vorteile erreicht, wenngleich an der notwendigen Maschine Steuerungsmittel für die Stillsetzung des Werkzeuges in der Werkzeugwechselposition vorgesehen sein müssen. Die Anordnung von zwei Spindelstöcken erlaubt eine sichere und feste Einspannung des Werkstückes und die Übertragung eines großen Drehmoments auf das Werkstück, so daß mit hoher Zerspanungsleistung gearbeitet werden kann. Die Verwendung mindestens eines weiteren Spindelstockes für einen Werkzeugträger macht eine Werkstückentnahme in radialer Richtung möglich. Dieser Vorteil bleibt auch bei Verwendung weiterer Spindelstöcke für weitere Werkzeugträger erhalten. Diese müssen lediglich alle auf der gleichen Seite einer Längsebene durch die Mittel linien der Werkstückspindeln liegen, wobei die Mittellinien der Werkzeugspindeln gemeinsam in einer Längsebene durch die Mittellinien der Werkstückspindeln liegen sollen. Die Verschiebbarkeit und Positionierbarkeit der Spindelstöcke für die Werkzeugträger ermöglicht eine rasche Einstellung auf wechselnde Werkstückabmessungen. Eine Neueinstellung kann sogar in der Zeit des Werkstückwechsels vorgenommen werden, wodurch wiederum Nebenzeiten eingespart werden können.

Als Werkstückwechselposition ist am Werkzeug mindestens eine einer letzten Schneidkante nachfolgende, von Schneidkanten freie Zone vorgesehen, die in zum Werkstück gegenüberliegender Position bewegt und stillgesetzt wird.

Der Maschinenaufbau erlaubt es, mit einfachen Mitteln die richtige Lage der Werkzeuge für die Einleitung und Durchführung des Werkstückwechsels zu erfassen und die Maschine entsprechend zu steuern.

Weitere Vorteile werden nach der Erfindung dadurch erzielt, daß das Maschinenbett vertikal angeordnet ist, bei horizontalem Verlauf der Mittellinien der Spindeln. Hierdurch wird einerseits ein günstiger Zugang zum Werkstück und andererseits ein günstiger Späneabtransport erreicht.

Eine weitere Ausgestaltung ist nach der Erfindung darin zu sehen, daß das Maschinenbett als Portal gestaltet ist. In waagerechter Anordnung erlaubt der Freiraum des Portals den einfachen Zugang zu einer Spänegrube. In vertikaler Anordnung des Maschinenbettes in der nach der Erfindung vorgeschlagenen Art ist ohnehin ein günstiger Zugang zu einer Spänegrube möglich und es ist gleichzeitig ein Durchtakten des Werkstückes durch die Maschine, also durch das Portal des Maschinenbettes, problemlos möglich.

Auch ist nach der Erfindung noch vorgeschlagen, daß jeder Werkzeugspindelstock oberhalb der zugeordneten Werkstückspindelstöcke angeordnet ist. Hierdurch wird wiederum ein günstiger Zugang zum Werkstück erreicht und gleichzeitig verhindert, daß Werkzeug und Werkzeugträger durch Schmutz- und Spänefall belastet werden.

Alternativ ist vorgeschlagen eine Maschine für eine Drehräumbearbeitung mit einem beweglichen Werkzeugträger mit daran angeordneten Schneidkanten, wobei der Werkzeugträger eine Bewegung der Schneidkanten auf gekrümmter Bahn ermöglicht und wobei auf einem Maschinenbett angeordnet mindestens zwei Spindelstöcke in sich gegenüberliegender Anordnung und mit je zwei sich gegenüberliegend jeweils in einer Spindeltrommel angeordneten, um eine Maschinenachse drehantreibbaren, Werkstückspindeln vorgesehen sind, wobei jeder Werkzeugträger in einer dem Werkzeugwechsel dienenden Trägertrommel drehantreibbar gelagert ist, die ihrerseits in Ständern um eine Drehachse drehantreibbar und in Drehrichtung positionierbar gelagert ist, wobei weiter Mittel vorgesehen sind, die eine Winkellage des Werkzeugträgers für den Arbeitsbeginn und eine Winkellage des Werkzeugträgers für die Entnahme erfassen, wobei in der Winkellage für die Entnahme eine von Schneidkanten freie Zone dem Werkstück zugewandt ist, und die Steuersignale für die Be- und Entladung und mindestens den Arbeitsbeginn und die Maschinensteuerung weiterleiten. Hierdurch gelingt es, mindestens zwei Werkzeuge zum Einsatz zu bringen, und zwar je nach Maschinenkonstruktion entweder abwechselnd oder gleichzeitig, wobei die verwendeten Werkzeuge auch gleich oder unterschiedlich sein können und am Werkzeugträger auf unterschiedlichen Positionen angeordnet sein können. Die radiale Entnehmbarkeit des Werkstückes wird nicht gestört. Die Werkzeuge können auf einfache Art und Weise in Arbeitsposition gebracht oder aus der Arbeitsposition entfernt werden. Es ist aber auch möglich mit der drehbeweglichen Trägertrommel zusätzlich oder ausschließlich den Werkzeugvorschub zu bewirken.

Weiterhin ist nach der Erfindung vorgeschlagen, daß die Drehachse der Trägertrommel parallel und in einem Abstand zur Maschinenachse angeordnet ist. Hierdurch ist Platz geschaffen für einen unproblematischen Werkstückwechsel, der nicht zu unnötigen Nebenzeiten zwingt.

Ergänzend ist nach der Erfindung noch vorgeschlagen, daß die Drehachse der Trägertrommel parallel zur Drehachse der Werkzeugträger angeordnet ist. Dies ist eine vorteilhafte und unproblematische Anordnung.

Weiter ergänzend ist nach der Erfindung noch vorgeschlagen, daß jede Trägertrommel in mindestens zwei vorgegebene Winkelpositionen einfahrbar ist. Hierdurch können die Werkzeuge einfach und automatisch bewegt und in eine gewünschte Lage gebracht werden.

In weiterer Ausgestaltung der erfindungsgemäßen Einrichtung ist vorgeschlagen, daß jede Spindeltrommel auf einer Welle angeordnet ist, die ihrerseits im zugeordneten Spindelstock drehbar und positionierbar gelagert ist. Hierdurch wird die Maschine flexibler und erreicht eine höhere Produktivität. Es ist hierdurch möglich, Maschinen zu gestalten, die sehr große Stückzahlen in der Serie wirtschaftlich fertigen. Es ist aber auch möglich, mit diesem Konstruktionsmerkmal und in Kombination mit vorangegangenen Merkmalen eine sehr flexible Maschine zu gestalten, die unterschiedliche Werkstücke in unterschiedlichen Arbeitspositionen mit unterschiedlichen Werkzeugen bearbeiten kann.

Es ist weiter nach der Erfindung noch ergänzend vorgesehen, daß die Wellen koaxial zueinander angeordnet sind. Die vorteilhafte Konstruktion solcher Trägertrommeln wurde bereits erwähnt. Selbstverständlich sind auch Werkstückspindeln in dieser Art einfach zu lagern. Der Aufbau wird insgesamt vereinfacht.

Nach einer Alternativen der Erfindung ist vorgesehen eine Maschine für eine Drehräumbearbeitung mit einer um eine Maschinenachse drehantreibbaren Werkstückspindel und einem beweglichen Werkzeugträger mit daran angeordneten Schneidkanten, wobei der Werkzeugträger eine Bewegung der Schneidkanten auf gekrümmter Bahn ermöglicht und wobei auf einem Maschinenbett angeordnet mindestens zwei Spindelstöcke in sich gegenüberliegender Anordnung und mit gemeinsamer Mittellinie der Werkstückspindeln vorgesehen sind, wobei in mindestens einem der Spindelstöcke ein Werkzeugträger drehantreibbar gelagert ist und wobei die Mittellinie des Werkzeugträgers parallel zur Mittellinie der Werkstückspindeln verläuft und wobei Mittel vorgesehen sind, die eine Winkellage des Werkzeugträgers für den Arbeitsbeginn und eine Winkellage des Werkzeugträgers für die Entnahme erfassen, wobei in der Winkellage für die Entnahme eine von Schreidkanten freie Zone dem Werkstück zugewandt ist, und die Steuersignale für die Be- und Entladung und mindestens den Arbeitsbeginn an die Maschinensteuerung weiterleiten. Dies ist ein einfacher und übersichtlicher Maschinenaufbau, der gleichzeitig eine gute Handhabung des Werkstückes erlaubt.

Weiter ist nach der Erfindung vorgeschlagen, daß die Werkstückspindel in eine vorgegebene, feste Winkellage einfahrbar ist. Dies ist insbesondere dann günstig, wenn das Werkstück unsymmetrische Formen aufweist, wie z. B. bei einer Kurbelwelle. Es existiert dann eine bevorzugte Werkstücklage für den Werkstückwechsel, der dann, wenn die Werkstückspindel in eine vorgegebene feste Winkellage einfahrbar ist und eingefahren ist, durchgeführt werden kann.

Weiterhin ist nach der Erfindung noch vorgesehen, daß in Umfangsrichtung am Werkzeugträger Schneidkantenträger mit Schneidkanten angeordnet sind, wobei mindestens ein Umfangsbereich zur Bildung einer Entnahmelücke frei ist von Schneidkantenträgern. Auf diese Art und Weise wird ein Werkzeug aus einzelnen Teilstücken aufgebaut, wobei am Umfang solche Teilstücke einfach weggelassen werden können, um eine Entnahmelücke zu bilden. Eine besondere Formgestaltung des Werkzeuges zur Bildung einer solchen Entnahmelücke ist dann nicht mehr notwendig. Der Einsatz eines Werkzeugträgers, auf dem Schneidkantenträger angeordnet werden können, erreicht daher den angestrebten Zweck und stellt ein vereinfachendes Merkmal der erfindungsgemäßen Maschine dar.

Es ist weiter vorgesehen, daß die Werkzeugträger als Spindeln ausgebildet sind, in parallel zueinander verlaufender Anordnung. Spindeln sind einfach zu lagern und der Drehantrieb ist einfach zu bewirken. Die Übertragung der Drehbewegung auf zugeordnete Werkzeuge ist ebenfalls einfach, so daß sich durch diese Konstruktion auf einfachste Art und Weise die notwendige Werkzeugbewegung erzeugen läßt.

Ergänzend ist nach der Erfindung noch vorgeschlagen, daß jeder Spindelstock für einen Werkzeugträger parallel zu der Mittellinie der Werkstückspindeln verschiebbar und positionierbar angeordnet ist. Hierdurch können die zugeordneten Werkzeuge auf axial unterschiedliche Lagen des Werkstückes und auf axial unterschiedlich liegende Arbeitsstellen am Werkstück eingestellt werden.

Ergänzend ist nach der Erfindung vorgeschlagen, daß jeder Spindelstock für einen Werkzeugträger vertikal zur Mittellinie eines Werkzeugträgers verschiebbar und positionierbar angeordnet ist. Hierdurch gelingt es einerseits die gesamte Einrichtung auf unterschiedliche Durchmesserlagen der Werkzeuge und andererseits auf unterschiedliche Fertigdurchmesser am Werkstück bei gleichen Werkzeugabmessungen einzustellen.

Weiter ist nach der Erfindung noch vorgeschlagen, daß die Drehgeschwindigkeit von Werkstückspindel und/oder Werkzeugträger veränderbar ist. Hierdurch kann das pro Zeiteinheit entstehende Zerspanungsvolumen konstant gehalten oder auch verändert werden. Hierdurch kann eine Anpassung an das Schwingungsverhalten des Werkstückes und/oder an die Schneidleistung der jeweils in Eingriff befindlichen Schneidplatten erfolgen. Die Leistung der Maschine und die Qualität des Arbeitser gebnisses können somit optimiert werden.

Eine weitere Variationsmöglichkeit ergibt sich nach der Erfindung dadurch, daß jeder Spindelstock für eine Werkstückspindel verschiebbar und positionierbar angeordnet ist. Hierdurch wird auch eine zusätzliche Einstellung auf unterschiedliche Werkstücklängen möglich. Ebenso können die zugeordneten Werkzeuge auf axial unterschiedliche Lagen des Werkstückes und auf axial unterschiedlich liegende Arbeitsstellen am Werkstück eingestellt werden.

Die Erfindung soll nun anhand der beigefügten Skizzen näher erläutert werden.

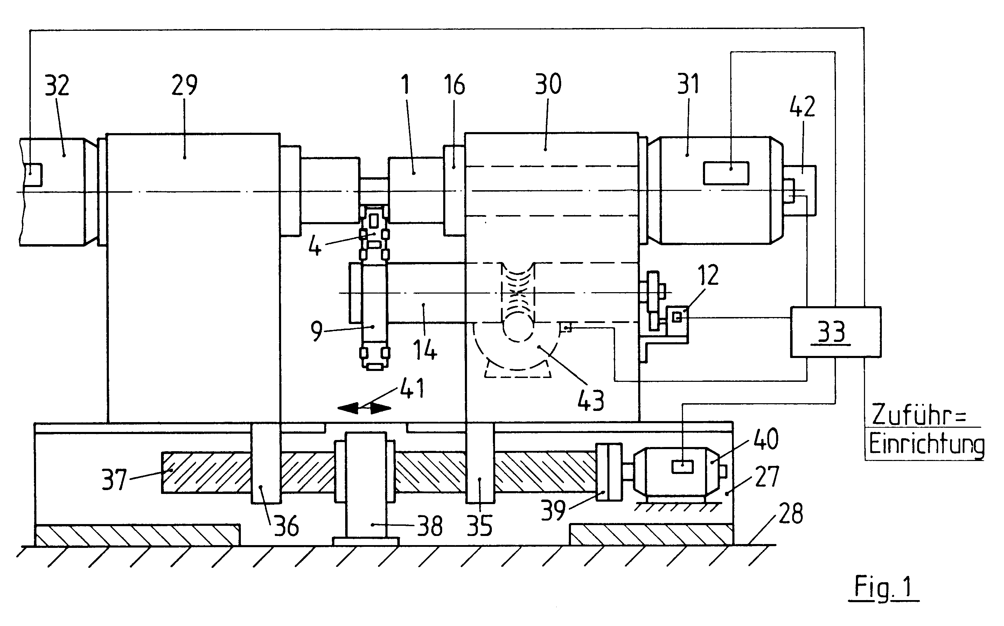

Es zeigen:
- Figur 1:: drehbankähnliche Maschine mit Räumwerkzeug und Werkstück in Seitenansicht und Teilschnitt
- Figur 2:: Relation von Werkstück und Werkzeug bei einer Einrichtung nach Figur 1 im Querschnitt
- Figur 3:: im wesentlichen rechte Hälte der erfindungsgemäßen Räummaschine in Seitenansicht
- Figur 4:: mögliche Entnahmeposition zwischen Werkstück und Werkzeug im Querschnitt.
- Figur 5:: Schnitt entlang der Linie I-I nach Figur 4
- Figur 6:: Räummaschine in Vorderansicht
Der Aufbau einer Maschine nach Figur 1 ähnelt in seiner Grundkonzeption dem Aufbau einer bekannten Drehmaschine. Ein Maschinenbett 27 ist auf einem Fundament 28 befestigt. Auf dem Maschinenbett sind verschieblich zwei Spindelstöcke 29 und 30 angeordnet. Beide Spindelstöcke 29 und 30 tragen Werkstückspindeln 16, die in den Spindelstöcken drehbar gelagert und über die Motoren 31 und 32 antreibbar sind. Die Werkstückspindeln 16 weisen an den nicht näher bezeichneten Köpfen übliche Einrichtungen zur Aufnahme eines Werkstückes 1 auf. Für eine Bearbeitung des Werkstückes 1 muß dieses in Drehbewegung versetzt werden. Hierzu dienen die Motoren 31 und 32, die über eine Maschinensteuerung 33 synchron gesteuert werden. Je nach Bauart des Werkstückes ist es jedoch auch möglich, auf einen der beiden Motoren zu verzichten und das Werkstück nur über eine motorgetriebene Werkstückspindel anzutreiben und die andere Werkstückspindel leer mitlaufen zu lassen.

Die Spindelstöcke 29 und 30 weisen an ihrer Unterseite in das Maschinenbett 27 hineinragende Mitnehmerstücke 35 und 36 auf, mit je einer durchgehenden Gewindebohrung, wobei die Gewindesteigung des einen Mitnehmerstückes entgegengesetzt zur Gewindesteigung des anderen Mitnehmerstückes ist. Durch beide Mitnehmerstücke 36 und 35 geht eine entsprechende Gewindespindel 37 mit dem zum jeweiligen Mitnehmerstück 35 bzw. 36 gehörenden Gewinde hindurch, wobei die Gewindespindel 37 im Lagerbock 38, der am Fundament 28 befestigt ist, drehbar und axial unverschiebbar gelagert ist. Die Gewindespindel 37 kann über eine Kupplung 39 mit einem Elektromotor 40 verbunden sein, der seinerseits wieder mit der Maschinensteuerung 33 verbunden und von dort gesteuert wird. Durch eine Betätigung des Motors 40 können die Spindelstöcke 29 und 30 in Richtung des Pfeils 41 und entgegengesetzt hierzu verschoben werden. Durch diese Verschiebung wird ein Werkstück 1 entnehmbar oder auch einsetzbar und spannbar. Es ist jedoch auch denkbar, nicht die Spindelstöcke 29 und 30 zu verschieben, sondern ausschließlich die Werkstückaufnahmeeinrichtungen an den Werkstückspindeln 16 so zu gestalten, daß ein problemloser Werkstückwechsel möglich wird. Hierzu ist es auch denkbar, nur die Werkstückspindeln 16 selbst oder Teile davon axial zu verschieben. Solche Konstruktionen sind bekannt und müssen daher hier nicht gesondert beschrieben werden. Damit dies alles bei Bedarf auch in einer gewünschten Drehlage geschehen kann, weist z. B. der Motor 31 einen auf seiner Achse angeordneten Drehwinkelgeber 42 auf, der seine Information an die Maschinensteuerung 33 gibt. Dies ist besonders dann der Fall, wenn das Werkstück 1 z. B. eine Kurbelwelle ist.

Im Spindelstock 30 ist unterhalb der Werkstückspindel 16 ein als Spindel ausgebildeter Werkzeugträger 14 drehbar und mit seiner Achse parallel zur Achse der Werkstückspindel 16 gelagert. Dieser Werkzeugträger 14 kann über ein nicht näher bezeichnetes Schneckengetriebe und einen Motor 43 drehangetrieben werden. Der Motor 43 ist wieder mit der Maschinensteuerung 33 verbunden. Der Werkzeugträger 14 ist verbunden mit einem Drehwinkelgeber 12, der seine Impulse wiederum an die Maschinensteuerung 33 abgibt, so daß diese Drehwinkellage des Werkzeugträgers 14 stets bekannt ist. Zusätzlich ist hierdurch auch die Drehgeschwindigkeit des Werkzeugträgers 14 bekannt.

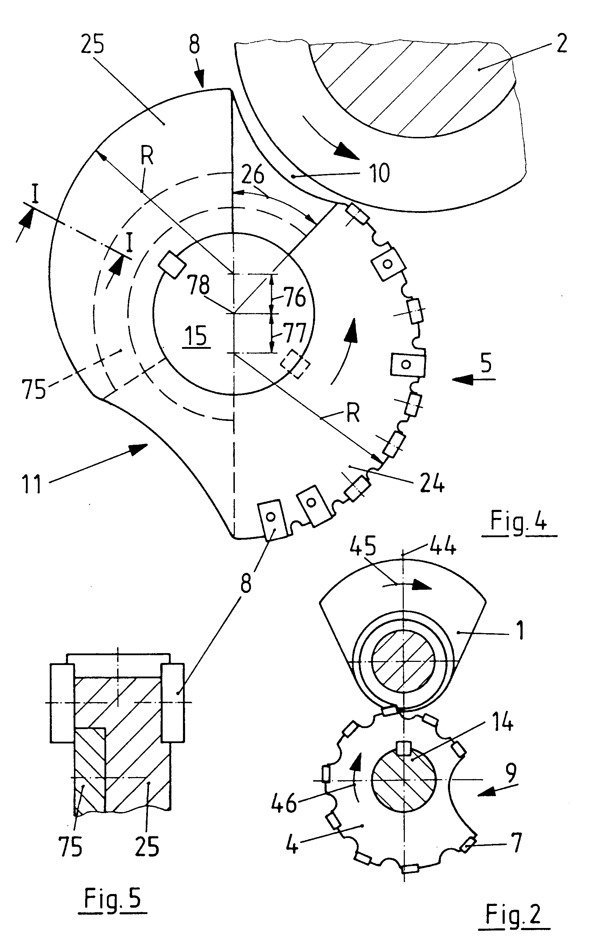

In fliegender Anordnung weist der Werkzeugträger 14 zwischen den Spindelstöcken 29 und 30 ein mit Schneidkanten besetztes Werkzeug 4 zum Räumen des Werkstücks 1 auf. Während der Bearbeitung haben das Werkstück und das Werkzeug eine relative Lage zueinander, wie dies in Figur 2 dargestellt ist.

Ist, wie im Ausführungsbeispiel nach Figur 1, der Werkzeugträger 14 drehbar, aber axial unverschiebbar im Spindelstock 30 gelagert, dann behält das Werkzeug 4 seine relative Lage zum Spindelstock 30 immer bei. Dies kann bei der Massenfertigung dann vorteilhaft sein, wenn es gelingt, die Werkstücke 1 in immer exakt gleichen Positionen zu spannen. Es ist aber auch problemlos möglich, den Werkzeugträger 4 beispielsweise im Inneren des Spindelstockes 30 als Vielkeilwelle auszubilden, auf der axial verschieblich das Schneckenrad für dieVerbindung mit dem Motor 43 aufgesetzt ist. Über einen Gewindetrieb oder einen Hydrauliktrieb kann dann der Werkzeugträger 14 beliebig axial verschoben werden. Es ist auch möglich, mehrere Werkzeuge 4 auf dem Werkzeugträger 14 anzuordnen oder diesen nicht fliegend zu lagern, sondern eine entsprechende Lagerung im gegenüberliegenden Spindelstock 29 vorzusehen. Die konstruktive Lösung solcher Ausführungsformen ist für den Fachmann ohne weiteres möglich und muß daher hier nicht im Detail beschrieben werden. Es muß auch darauf hingewiesen werden, daß der Werkzeugträger 14 nicht unbedingt in einer vertikal verlaufenden Ebene durch die Achse der Werkstückspindel 16 liegen muß, sondern zu dieser durchaus eine Anordnung seitlich davon aufweisen kann. Betrachtet man die Ebene 44 nach Figur 2 als eine solche vertikale Ebene, so wäre bei gleicher Relation also eine Anordnung wie in Figur 4 dargestellt, möglich.

Für die Bearbeitung eines eingespannten Werkstückes 1 wird der Motor 31 und ggf. der Motor 32 über die Maschinensteuerung 33 mit der notwendigen Drehzahl für eine ausreichende Schnittgeschwindigkeit des Werkstücks 1 in Betrieb gesetzt, so daß sich das Werkstück 1 entsprechend schnell dreht. Vor Beginn der Bearbeitung steht hierbei das Werkzeug 4 so, daß die von Schneidkanten freie Zone 9 des Werkstückes 4 sich dem Werkstück 1 zuwendet. Im Umfangsrichtung auf spiraliger Bahn weist das Werkzeug 4 einzelne geeignete Schneidkanten auf, von denen die Schneidkante mit dem Bezugszeichen 7 die letzte ist. Während der Bearbeitung des Werkstückes 1 dreht sich dieses in Richtung des Pfeils 45, während sich das Werkstück 4 in Richtung des Pfeils 46, angetrieben vom Motor 43, über den Werkzeugträger 14 dreht. Wegen der spiraligen Anordnung der Schneidplatten dringt während der Drehbewegung des Werkzeugs 4 dieses mit seinen Schneidkanten radial immer tiefer in den zu bearbeitenden Bereich des Werkstückes 1 ein. Während der Drehbewegung des Werkzeugs 4 kommt nun schließlich die letzte Schneidkante 7 am Werkstück zum Einsatz und vollendet dort die vorgesehene Tätigkeit. Sobald die Schneidkante 7 den Werkstückbereich verlassen hat, wendet sich die von Schneidkanten freie Zone 9 dem Werkstück 1 zu und es kann jetzt während der kontinuierlichen Weiterdrehung des Werkzeugs 4 in Richtung des Pfeils 46, die ja langsam erfolgt, das Werkstück 1 gewechselt werden. Ein solcher Wechsel geschieht mit modernen Zuführeinrichtungen innerhalb weniger Sekunden. Hierzu wird über den Motor 40, der einen entsprechenden Steuerungsimpuls von der Maschinensteuerung 33 erhalten hat, die Gewindespindel 37 so bewegt, daß die Spindelstöcke 29 und 30 in Richtung des Pfeils 31 auseinanderfahren. Die Information wann, also in welcher Winkellage des Werkzeugs 4 dies erfolgen kann, erhält die Maschinensteuerung 33 vom Drehwinkelgeber 12. Bevor jedoch die Spindelstöcke 23 und 30 auseinanderfahren, werden zunächst die Motoren 31 und 32 stillgesetzt und über die Maschinensteuerung 33 die Zuführeinrichtung informiert. Die nicht dargestellte Zuführeinrichtung ergreift jetzt das Werkstück 1 und hält gleichzeitig ein weiteres Werkstück 1 für den Wechsel bereit. Jetzt erst fahren die Spindelstöcke 29 und 30 auseinander und es wird das fertig bearbeitete Werkstück 1 entnommen und gleichteitig ein noch nicht bearbeitetes Werkstück 1 eingesetzt. Über den erfolgten Vorgang informiert die nicht gezeichnete Zuführeinrichtung die Maschinensteuerung 33, die daraufhin einen Impuls an den Motor 40 abgibt, so daß die Spindelstöcke 29 und 30 wieder synchron entgegengesetzt zur Richtung des Pfeils 41 zusammenfahren und dabei das neu eingesetzte Werkstück 1 spannen. Während dieses Vorgangs kann der Werkzeugträger 14 mit dem Werkzeug 4 durchaus kontinuierlich weiterlaufen. Es ist aber auch möglich die Drehbewegung des Werkzeugträgers 14 und damit des Werkzeugs 4 während der Zeit des Werkstückwechsels zu stoppen. Die erfolgte Spannung des Werkstücks kann beispielsweise über die Stromaufnahme des Motors 14 von der Maschinensteuerung 33 ermittelt werden, die daraufhin wieder Motoren 31 und 32 in Betrieb setzt und ggf. auch den Motor 43 wieder ansteuert. Muß für den Werkstückwechsel eine bestimmte Drehwinkellage der Werkstückspindel 16 eingehalten werden, so erhält die Maschinensteuerung 33 eine entsprechende Information über den Drehwinkelgeber 42.

Der Vorgang des Räumens an sich auch unter Anwendung gekrümmter Werkzeuge ist bekannt und muß daher hier nicht erläutert werden.

Figur 3 zeigt eine Einrichtung im Prinzip wie Figur 1, jedoch mit zwei Werkstückspindeln und zwei Werkzeugträgern. Der Übersichtlichkeit halber ist im wesentlichen nur die rechte Hälfte der Maschine dargestellt. Diese rechte Seite wiederholt sich spiegelbildlich auf der anderen Seite der mit dem Pfeil A gekennzeichneten Ebene.

Im wesentlichen besteht eine Maschine nach Figur 3 aus einem Spindelstock 47, dem ein gegenüberliegender, nicht dargestellter Spindelstock entspricht. Im Spindelstock 47 ist eine Welle 48 drehbar gelagert. Drehgeschwindigkeit und Drehlage der Welle 48 werden der Maschinensteuerung 34 über einen Drehmelder 49 gemeldet. Die Welle 48 ragt mit einem fliegenden Ende in den Arbeitsbereich zwischen den sich gegenüberliegenden Spindelstöcken 47 der Maschine hinein. Auf der Welle 48 ist drehfest und axial unverschiebbar eine mit der Welle 48 drehbare Spindeltrommel 23 bzw. auf der anderen Seite 23' vorgesehen. Diese Spindeltrommel 23 besteht im wesentlichen aus zwei parallel zueinander in einem Abstand auf der Welle 48 angeordneter Scheiben, von der die dem Ende der Welle 48 am nächsten angeordnete Scheibe auf der Außenseite eine Verzahnung für ein Schneckenrad aufweist, in welche ein von einem Motor 50 angetriebenes, nicht näher bezeichnetes Schneckenrad eingreift.

In sich diametral gegenüberliegender Anordnung weist die Spindeltrommel 23 jeweils eine Lagerstelle für die Lagerung einer Werstückspindel 17 bzw. 18 auf. Die Werkstückspindeln 17 und 18 weisen am vorderen Ende übliche Spannmittel für die Aufnahme eines Werkstückes 2 bzw. 3 auf, sind jedoch axial verschieblich in der Spindeltrommel 23 gelagert. Eine axiale Verschiebung der Werkstückspindeln 17 und 18 kann bewirkt werden über Strömungsmittelzylinder 51, die am hinteren Ende der Werkstückspindeln 17 und 18 vorgesehen sind und sich mit ihrem Zylindergehäuse an der Spindeltrommel 23 abstützen. Eine im Zylindergehäuse der Strömungsmittelzylinder 51 angeordnete, axial wirkende und nicht näher bezeichnete Feder sorgt für die Spannbewegung und die Spannkraft der Werkstückspindeln 17 bzw. 18. Zum Lösen werden die Strömungsmittelzylinder 51 auf der der Federseite abgewandten Kolbenseite der in den Zylindern befindlichen Kolben in noch zu beschreibender Weise von einem Strömungsmittel beaufschlagt.

Zwischen den beiden Einzelscheiben der Spindeltrommel 23 weist jede Werkstückspindel 17 und 18 ein drehfest und axial unverschiebbar damit verbundenes Zahrand 52 bzw. 53 auf. In entsprechender Drehstellung der Spindeltrommel 23 kann jedes Zahnrad 52 bzw. 53 kämmen mit einem Zahnrad 54, welches von einem Motor 55 angetrieben wird. Motor 55 ist mit der Maschinensteuerung 34 verbunden und wird von dort gesteuert.

Seitlich oder auch unterhalb der Welle 48 ist eine Trägertrommel 20, bestehend aus zwei im Abstand und parallel zueinander angeordneten Scheiben vorgesehen, in der Räumwerkzeuge 5 und 6 auf Werkzeugträgern 15 und 19 angeordnet sind. Die Werkzeugträger 15 und 19 sind als Wellen ausgebildet, die in den genannten Scheiben der Trägertrommel 20 drehantreibbar gelagert sind. Die Trägertrommel 20 selbst ist um die Drehachse 21 drehbar in entsprechenden Ständern 56 und 56' gelagert. Die Drehachse 21 ist drehfest verbunden mit einem Schneckenrad 57, welches von einem Motor 58 antreibbar ist, der seinerseits mit der Maschinensteuerung 34 verbunden ist.

Zur Drehbetätigung der Werkzeuge 5 und 6 mittels einer Drehbewegung der als Wellen ausgebildeten Werkzeugträger 15 und 19 ist gegenüberliegend dem Schneckenrad 57 koaxial zur Drehachse 21 eine nicht näher bezeichnete Antriebswelle eingeführt, die drehfest mit einem Schneckenrad 59 verbunden ist. In der benachbarten Scheibe der Trägertrommel 20 ist diese Antriebswelle drehfest mit einem Zahnrad 60 verbunden, das mit Ritzeln 61 kämmt. Die Ritzen 61 sind koaxial zu den wellenförmigen Werkzeugträgern 15 und 19 angeordnet und mittels einer nicht näher bezeichneten Kupplung drehfest mit diesen Wellen verbindbar. Gleichzeitig sind im Bereich der Wellen 15 und 19 und von diesen betätigbar nicht näher bezeichnete Drehmelder vorgesehen, die über eine Steuerleitung 62 bzw. 63 mit einer Einrichtung 13 verbunden sind. Auch das Schneckenrad 57 weist einen nicht näher bezeichneten Drehmelder auf, der über die Steuerleitung 64 mit der Einrichtung 13 verbunden ist. Die Einrichtung 13 selbst ist über die Steuerleitung 65 mit der Maschinensteuerung 34 verbunden.

Ein Motor 66 ist ebenfalls einerseits mit der Maschinensteuerung 34 und andererseits mechanisch mit dem Schneckenrad 59 verbunden, so daß über eine Betätigung des Motors 66 auch die Werkzeuge 5 und 6 in Drehung versetzt werden können. Diese Werkzeuge 5 und 6 weisen von Schneidkanten freie Zonen 10 bzw. 11 auf, wie dies in Figur 4 dargestellt ist.

Im Inneren des Spindelstockes 47 weist die Welle 48 einen diese umgebenden Verteilerring 67 auf, der von einem feststehenden Verteileranschluß umgeben ist. In der Welle 48 sind Hydraulikleitungen 69 und 70 geführt, die über die Spindeltrommel 23 und durch die Werkstückspindeln 17 bzw. 18 die Vorderseite der Kolben in den Strömungsmittelzylindern 51 geleitet sind. Über nicht näher bezeichnete umlaufende Anschlußkanäle in dem Verteileranschluß 68 sind die Hydraulikleitungen 69 und 70 schließlich weitergeführt zum Ventil 71. Dieses Ventil weist drei Schaltstellungen und vier Anschlüsse auf. In der dargestellten Mittelstellung sind beide Hydraulikleitungen 69 und 70 auf den Tank 72 gelegt. Die beiden anderen Schaltstellungen ermöglichen eine wahlweise Beaufschlagung des einen oder anderen Strömungsmittelzylinders 51. Das Ventil 71 selbst ist mit seinen Betätigungsmagneten mit der Maschinensteuerung 34 verbunden. Für das notwendige Druckmittel sorgt hierbei eine Hydraulikpumpe 73, die von einem Motor 74 angetrieben wird, der seinerseits wieder mit der Maschinensteuerung 34 verbunden ist.

Die Maschinensteuerung 34 ist ebenfalls in geeigneter Weise mit einer nicht dargestellten Zuführeinrichtung verbunden, damit die Tätigkeit der Zuführeinrichtung mit dem Maschinenzyklus abgestimmt werden kann.

Figur 3 zeigt eine erfindungsgemäße Maschine in Seitenansicht mit zwei eingespannten Werkstücken, von denen das Werkstück 2 gerade fertig bearbeitet ist, während das Werkstück 3 noch völlig unbearbeitet ist. In dem dargestellten Zustand muß das Werkstück 2 nun aus dem Arbeitsbereich des Werkzeugs 5 entfernt und das Werkstück 3 dort hin transportiert werden. Über den dem Schneckenrad 57 zugeordneten Drehgeber erhält die Einrichtung 13 über die Steuerleitung 64 die Information darüber, daß das Werkzeug 5 am Werkstück 2 gearbeitet hat. Wenn der dem Werkzeug 5 zugeordnete Drehwinkelgeber mit der Steuerleitung 62 mit der Einrichtung 13 verbunden ist, erhält damit auch die Einrichtung 13 über die Steuerleitung 62 die Information darüber, daß das Werkzeug 5 eine Werkstückwechselposition eingenommen hat, wie in Figur 4 dargestellt. Die über die Steuerleitung 62 und 64 der Einrichtung 13 zugeführte Information wird über die Leitung 65 der Maschinensteuerung 34 zugeführt. Die Maschinensteuerung 34 veranlaßt die Außerbetriebsetzung des Motors 55 und veranlaßt die Zuführeinrichtung mit einer leeren Greifzange und einer mit einem neuen Werkstück gefüllten Greifzange in Wechselposition bereit zu stehen. Je nach Dauer des Wechselvorgangs und Größe der von Schneidstoffen freien Zone 10 kann über die Maschinensteuerung 34 der Motor 66 stillgesetzt werden aber auch durchlaufen. Auch ist es möglich, einfach die dem Ritzen 61 zugeordnete Kupplung zu lösen. Nachfolgend wird nun von der Maschinensteuerung 34 der Motor 50 in Betrieb gesetzt und damit die Spindeltrommel 23 um 180° gedreht. Die entsprechende Winkelinformation erhält die Maschinensteuerung vom Drehmelder 49. Durch die genannte Drehung befindet sich nun das Werkstück 3 in der Position des in der Zeichnung dargestellten Werkstückes 2, so daß das Zahnrad 53 mit dem Zahnrad 54 des Motors 55 in Eingriff ist. Der Motor 50 wird von der Maschinensteuerung 34 gestoppt, so daß das Werkstück 3 in Arbeitsposition bleibt und der Motor 55 das Werkstück 3 in Drehung versetzt. Das Werkzeug 5 kann seine Bearbeitung des Werkstückes beginnen. Am sich jetzt in oberer Position befindenden Werkstück 2 wird eine Greifzange der nicht dargestellten Zuführeinrichtung angelegt und danach von der Maschinensteuerung 34 das Ventil 71 in die Schaltstellung mit den gekreuzten Pfeilen geschaltet. Hierdurch wird die Werkstückspindel 17 entlang der Maschinenachse 22 rückwärts verschoben und es kann jetzt von der Zuführeinrichtung das Werkstück 2 entnommen werden. Gleichzeitig, beispielsweise über den zweiten Greifer bringt die Zuführeinrichtung ein neues Werkstück in Spannposition und meldet dies der Maschinensteuerung 34, die daraufhin das Ventil 71 wieder in die Mittelstellung fährt, wodurch die Leitung 69 auf Tank gelegt wird und von der axial wirkenden Feder im Strömungsmittelzylinder 51 die Werkstückspindel 17 wieder nach vorne geschoben und damit das neu eingelegte Werkstück gespannt wird. Durch eine erneute Drehung der Spindeltrommel 23 um 180° kann dieses neu eingelegte Werkstück nun wieder in Arbeitsposition gebracht werden, um vom Werkzeug 5 bearbeitet zu werden.

Die Maschine nach Figur 3 kann mit feststehenden Werkzeugen 5 ausgerüstet sein, wie zur Figur 1 beschrieben. Es ist aber auch möglich eine Werkzeugwechseleinrichtung vorzusehen, wie in Figur 3 dargestellt. Dort sind in sich gegenüberliegender Anordnung zwei Ständer 56 und 56' auf dem Fundament befestigt, die als Lagerständer für eine Drehachse 21 dienen. Auf der der Drehachse 21 zugeordneten, nicht näher bezeichneten Welle sind in sich gegenüberliegender Anordnung in einem Abstand zueinander zwei Scheiben drehfest und axial unverschieblich angeordnet, die gemeinsam eine Trägertrommel 20 bilden. Die Scheiben der Trägertrommel 20 weisen in sich diametral gegenüberliegender Anordnung Lagerstellen auf, in denen als Wellen ausgebildete Werkzeugträger 15 und 19 drehbar gelagert sind. Die Wellen 15 und 19 tragen ein Werkzeug 5 bzw. 6. Die Wellen 15 und 19 sind je mit einem Ritzel 61 verbunden, daß mittels einer nicht näher bezeichneten Kupplung mit den genannten Wellen drehfest verbindbar oder so lösbar ist, daß es ohne Mitnahme der Wellen auf diesen rotieren kann. Diese Ritzel 61 stehen in Eingriff mit einem zentralen Zahnrad 60 mit der Drehachse 21. Über die Drehachse 21 ist das zentrale Zahnrad 60 drehfest verbunden mit einem Schneckenrad 59, wobei das Schneckenrad 59 über eine entsprechende Schnecke von einem Motor 66 angetrieben werden kann. Der Motor 66 wird von der Maschinensteuerung 34 gesteuert. Das Schneckenrad 59 und das diesem zugeordnete und drehfest mit diesem verbundene zentrale Zahnrad 60 ist unabhängig von der Drehbewegung der der Trägertrommel 20 zugeordneten Achse oder Welle drehbar.

Auf der dem Schneckenrad 59 gegenüberliegenden Seite weist die die Trägertrommel 20 tragende Welle ein Schneckenrad 57 auf, das über einen entsprechenden Schneckentrieb vom Motor 58 angetrieben werden kann. Über den Antrieb des Schneckenrades 57 kann die gesamte Trägertrommel 20 gedreht werden. Um die Drehwinkellage der Trägertrommel 20 festzustellen, ist ein Drehwinkelgeber 12' vorgesehen, der über die Leitung 64 mit einer entsprechenden Auswerteeinrichtung 13 verbunden ist. Die als Wellen ausgebildeten Werkzeugträger 15 und 19 weisen ebenfalls geeignete Drehwinkelgeber auf, die über die Leitungen 62 und 63 mit der Einrichtung 13 verbunden sind, wie dies bereits beschrieben wurde.

Für die Bearbeitung der Werkstücke 2 oder 3 kann das Werkzeug 5 oder das Werkzeug 6 oder bei Bedarf auch immer abwechselnd das Werkzeug 5 und 6 in Arbeitsposition gebracht werden. Soll das Werkzeug 5 gewechselt werden, so kann irgend ein, den Wechselbedarf charakterisierender Zustand der Maschine abgefragt und ein entsprechendes Signal an die Maschinensteuerung gegeben werden. Es kann jedoch auch das Komando für den Werkzeugwechsel manuell der Maschinensteuerung 34 eingegeben werden. Die Maschinensteuerung veranlaßt dann den Motor 58 die Trägertrommel 20 über das Schneckenrad 57 zu drehen. Nach einer 180° Drehung, die von dem zugeordneten Drehwinkelgeber über die Steuerleitung 64 an die Einrichtung 13 und direkt an die Maschinensteuerung 34 weitergemeldet wird, wird der Motor 58 wieder gestoppt. Während der Drehung oder nach Beendigung der Drehung der Trägertrommel 20 wird die Drehwinkellage des Werkzeugsträgers 19 abgefragt und beispielsweise über die Steuerleitung 63 der Einrichtung 13 gemeldet. Die Kombination des Signals aus der Steuerleitung 65 und der Steuerleitung 63 wird von der Einrichtung 13 über die Steuerleitung 65 der Maschinensteuerung 34 zugeführt, die hierdurch weiß, welches Werkzeug sich in Arbeitsposition befindet und welche Drehlage dieses Werkzeug hat. Weicht die Drehlage von der Sollage ab, so wird von der Maschinensteuerung 34 der Motor 66 sinnentsprechend in Betrieb gesetzt und die den Ritzeln 61 zugeordnete Kupplung geschaltet, so daß das entsprechende Werkzeug in die richtige Drehlage gedreht werden kann. Dies wird über den entsprechend zugeordneten Dreh winkelgeber und der Einrichtung 13 wieder der Maschinensteuerung 34 gemeldet, die damit über das Erreichen der richtigen Drehlage des Werkzeuges informiert ist. Eine Drehbewegung der Trägertrommel 20 und damit der zugeordneten Werkzeuge kann gleichzeitig, aber auch unabhängig von einer Drehbewegung der Spindeltrommel 23 erfolgen. Darüber hinaus ist es auch möglich die Ständer 56, 56' nicht ortsfest am Fundament anzuordnen, sondern vielmehr auf einen Schlitten zu setzen und damit in Richtung der Maschinenachse 22 verfahrbar zu machen.

Die bei einer Maschine nach Figur 3 verwendeten Werkzeuge können sowohl Werkzeuge mit nur einer von Schneidkanten freien Zone 9 sein, wie in Figur 2 dargestellt, als auch solche Werkzeuge, mit mehreren von Schneidkanten freien Zonen 10 und 11, wie in Figur 4 dargestellt. Hierbei kann der die Schneidelemente tragende Grundkörper einstückig ausgebildet sein und über eine bekannte Feder-Nut-Verbindung beispielsweise mit dem Werkzeugträger 15 verbunden sein. Es ist aber auch möglich, einen eine Nabe aufweisenden Grundkörper 75 über die genannte Feder-Nut-Verbindung mit dem Werkzeugträger 15 drehfest zu verbinden und dann segmentartig ausgebildete Schneidkantenträger 24 bzw. 25 an einem nicht näher bezeichneten zugeordneten Flansch des Grundkörpers 75 (siehe Figur 5) zu befestigen. Die Schneidkantenträger 24 und 25 überdecken hier jeweils für sich einen Umfangsbereich von deutlich weniger als 180°, so daß bei sich gegenüberliegender Anordnung dieser Schneidkantenträger ein Umfangsbereich 26 von ausreichender Größe zweimal frei bleibt, wodurch die notwendigen, von Schneidkanten freien Zonen 10 und 11 dann gebildet werden. Im Bereich dieser schneidkanten Zonen 10 und 11 ist vorzugsweise der Flansch des Grundkörpers 75 bis zur Nabe unterbrochen.

Die als Segmente ausgebildeten Schneidkantenträger 24 und 25 selbst können eine kreisförmige Außenkontur haben mit dem Radius R. Es ist auch möglich, die beiden Radien R unterschiedlich zu bemessen. Die Mittelpunkte dieser Radien R können je um den Betrag 76 bzw. 77 zum Mittelpunkt 78 des Werkzeugträgers 15 versetzt sein. Diese Beträge 76 und 77 können natürlich ebenfalls unterschiedlich sein. Hierdurch können Werkzeuge für unterschiedlichste Arbeitsaufgaben gebildet werden. Es ist darüber hinaus natürlich auch möglich, die Schneidkantenträger 24 und 25 aus in Umfangsrichtung gesehen, wesentlich kleineren Segmenten zusammenzusetzen und so den Gesamtschneidenbereich aus einzelnen kleinen Segmenten aufzubauen.

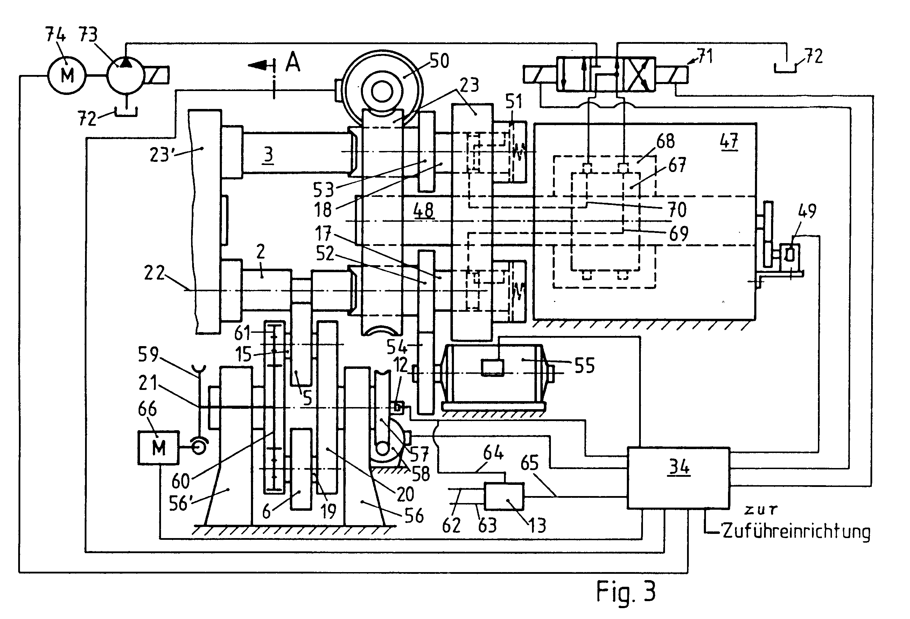

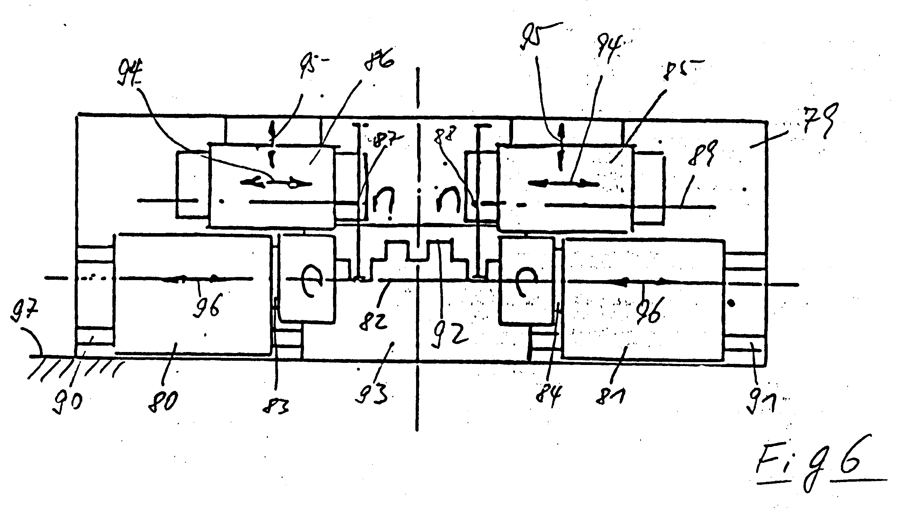

Die Ausführungsform nach Figur 6 ähnelt einer Ausführungsform nach Figur 1. Zunächst kann man die Ausführungsform nach Figur 6 als in Figur 6 in Draufsicht dargestellt betrachten. Parallel zu einer nicht näher bezeichneten Fundamentoberfläche oder Bodenoberfläche ist ein Maschinenbett 79 angeordnet. Am vorderen Rand des Maschinenbettes 79 sind in sich gegenüberliegender Anordnung und mit gleicher Drehachse oder Mittellinie 82 zwei Spindelstöcke 80 und 81 auf Gleitführungen 90 und 91 verschiebbar und positionierbar angeordnet. Von den Werkstückspindeln 83 und 84 dieser Spindelstöcke 80 und 81 kann ein Werkstück 92, beispielsweise eine Kurbelwelle, aufgenommen und drehangetrieben werden.

Neben den Spindelstöcken 80 und 81 sind zwei weitere Spindelstöcke 85 und 86 angeordnet, so daß jedem Spindelstock 81 bzw. 80 ein Spindelstock 85 bzw. 86 zugeordnet ist. Im Ausführungsbeispiel treiben die Spindelstöcke 85 und 86 Werkzeugträger 87 und 88 um eine gemeinsame Mittellinie 89 an. Die Werkzeugträger 87 und 88 können hierbei Werkzeuge z. B. nach Figur 4 oder Figur 2 tragen. Das Werkstück 92 ist vorzugsweise eine Kurbelwelle, so wie dies auch in Figur 2 angedeutet ist.

Wenn das Maschinenbett sich auf dem nicht näher bezeichneten Fundament abstützt, so daß die Darstellung in Figur 6 als Draufsicht zu sehen ist, kann das Maschinenbett 79 in U-form ausgebildet sein und hierbei zentral eine Portalöffnung 93 freilassen. Diese Portalöffnung 93 kann einen Zugang zu einer Spänegrube freilassen. In einer solchen Anordnung kann die Kurbelwelle von den Spindelstöcken 80 und 81 aufgenommen und drehangetrieben werden. Von den nicht näher bezeichneten Werkzeugen auf den Werkzeugträgern 87 und 88 kann dann die Kurbelwelle an den gewünschten Stellen bearbeitet werden. Um die Flexibilität der Maschine zu vergrößern, ist es möglich, die Spindelstöcke 85 und 86 parallel zu den Mittellinien 82 bzw. 89 in Richtung der Pfeile 94 zu verfahren. Eine weitere Verfahrmöglichkeit kann noch in Richtung der Pfeile 95 vorgesehen sein. Hierzu ist es lediglich erforderlich, den Spindelstock 85 bzw. 86 auf einem nicht näher bezeichneten Schlitten in Richtung der Pfeile 94 verschieblich und positionierbar anzuordnen. Dieser nicht näher bezeichnete Schlitten ist dann auf Führungen des Maschinenbettes 79 in Richtung der Pfeile 95 verschiebbar und positionierbar. Auf diese Art und Weise kann die gesamte Maschine an unterschiedliche Arbeitsbedingungen sehr einfach angepaßt werden. Ergänzend ist hierbei noch möglich, die Spindelstöcke 80 und 81 in Richtung der Pfeile 96 verfahrbar und positionierbar zu gestalten.

Eine besonderer Vorteil ergibt sich dann, wenn das Maschinenbett 79 in der Anordnung nach Figur 6 hochkant gestellt wird, so daß es ein Portal bildet. Das Fundament wird dann von der Linie 97 angedeutet. Die Portalöffnung 93 erlaubt dann ein freies Durchtakten des Werstücks 92, senkrecht zur Zeichenebene. Eine Spänegrube kann im Fundament 97 vorgesehen sein, die ebenfalls nicht vom Bett 79 behindert wird.

Die beschriebenen Maschinenkonstruktionen sind bei Betrachtung ihrer jeweiligen Bearbeitungsmöglichkeiten bei Anwendung von Werkzeugen mit von Schneidkanten freien Zonen relativ einfach aufzubauen und können dennoch vielfältige Bearbeitungsaufgaben lösen. Nebenzeiten, die durch Werkzeugbewegungen verursacht werden, die nicht der Werkstückbearbeitung dienen, werden minimiert. Damit kann mit solchen Maschinen bei Anwendung des entsprechenden Arbeitsverfahrens die Ausbringleistung der Maschinen verbessert und gleichzeitig der Maschinenaufbau selbst vereinfacht werden.

### Liste der verwendeten Bezugszeichen

- 1: Werkstück
- 2: Werkstück
- 3: Werkstück
- 4: Werkzeug
- 5: Werkzeug
- 6: Werkzeug
- 7: letzte Schneidkante
- 8: letzte Schneidkante
- 9: von Schneidkanten freie Zone
- 10: von Schneidkanten freie Zone
- 11: von Schneidkanten freie Zone
- 12: Drehwinkelgeber
- 12': Drehwinkelgeber
- 13: Drehwinkelgeber
- 14: Werkzeugträger
- 15: Werkzeugträger
- 16: Werkstückspindel
- 17: Werkstückspindel
- 18: Werkstückspindel
- 19: Werkzeugträger
- 20: Trägertrommel
- 21: Drehachse
- 22: Maschinenachse
- 23: drehbewegliche Spindeltrommel
- 23': drehbewegliche Spindeltrommel
- 24: Schneidkantenträger
- 25: Schneidkantenträger
- 26: Umfangsbereich
- 27: Maschinenbett
- 28: Fundament
- 29: Spindelstock
- 30: Spindelstock
- 31: Motor
- 32: Motor
- 33: Maschinensteuerung
- 34: Maschinensteuerung
- 35: Mitnehmerstück
- 36: Mitnehmerstück
- 37: Gewindespindel
- 38: Lagerbock
- 39: Kupplung
- 40: Motor
- 41: Pfeil
- 42: Drehwinkelgeber
- 43: Motor
- 44: Ebene
- 45: Pfeil
- 46: Pfeil
- 47: Spindelstock
- 48: Welle
- 49: Drehwinkelgeber
- 50: Motor
- 51: Strömungsmittelzylinder
- 52: Zahnrad
- 53: Zahnrad
- 54: Zahnrad
- 55: Motor
- 56: Ständer
- 56': Ständer
- 57: Schneckenrad
- 58: Motor
- 59: Schneckenrad
- 60: Zahnrad
- 61: Ritzel
- 62: Steuerleitung
- 63: Steuerleitung
- 64: Steuerleitung
- 65: Steuerleitung
- 66: Motor
- 67: Verteilerring
- 68: Verteileranschluß
- 69: Hydraulikleitung
- 70: Hydraulikleitung
- 71: Ventil
- 72: Tank
- 73: Pumpe
- 74: Motor
- 75: Grundkrörper
- 76: Betrag
- 77: Betrag
- 78: Mittelpunkt
- 79: Maschinenbett
- 80: Spindelstock
- 81: Spindelstock
- 82: Mittellinie
- 83: Werkstückspindel
- 84: Werkstückspindel
- 85: Spindelstock
- 86: Spindelstock
- 87: Werkzeugträger
- 88: Werkzeugträger
- 89: Mittellinie Werkzeugträger
- 90: Gleitführungen
- 91: Gleitführungen
- 92: Werstück
- 93: Portalöffnung
- 94: Pfeile
- 95: Pfeile
- 96: Pfeile
- 97: Linie

## Patentansprüche

1. Maschine für eine Drehräumbearbeitung mit einer um eine Maschinen-achse drehantreibbaren Werkstückspindel und einem beweglichen Werkzeugträger mit daran angeordneten Schneidkanten, wobei der Werkzeugträger eine Bewegung der Schneidkanten auf gekrümmter Bahn ermöglicht und wobei auf einem Maschinenbett (79) angeordnet mindestens zwei Spindelstöcke (80,81) in sich gegenüberliegender Anordnung und mit gemeinsamer Mittellinie (82) der Werkstückspindeln (83,84) sowie mindestens ein weiterer Spindelstock (85,86) für den beweglichen Werkzeugträger (87,88), in dem der Werkzeugträger drehantreibbar gelagert ist, vorgesehen sind, wobei die Mittellinie (89) jedes Werkzeugträgers (87,88) parallel zur Mittellinie (82) der Werkstückspindeln (83,84) verläuft wobei jeder Spindelstock für einen Werkzeugträger (87,88) mindestens parallel zur Mittellinie (82) der Werkstückspindeln (80,81) verschiebbar und positionierbar angeordnet ist und wobei die Maschine Mittel (12,13) aufweist, die eine Winkellage des Werkzeugträgers (87,88) für den Arbeitsbeginn und eine Winkellage des Werkzeugträgers (87,88) für die Entnahme erfassen, wobei in der Winkellage für die Entnahme eine von Schneidkanten freie Zone (9,10,11) dem Werkstück (1,2,3,92) zugewandt ist, und die Steuersignale für die Be- und Entladung und mindestens den Arbeitsbeginn an die Maschinensteuerung (33,34) weiterleiten.

2. Maschine nach Anspruch 1, dadurch gekennzeichnet, daß das Maschinenbett (79) vertikal angeordnet ist, bei hoizontalem Verlauf der Mittellinien (82,89) der Spindeln.

3. Maschine nach einem der Ansprüche 1 oder 2, dadurch gekennzeichnet, daß das Maschinenbett (79) als Portal gestaltet ist.

4. Maschine nach einem der Ansprüche 1 bis 3, dadurch gekennzeichnet, daß jeder Werkzeugspindelstock (85,86) oberhalb der zugeordneten Werkstückspindelstöcke (80,81) angeordnet ist.

5. Maschine für eine Drehräumbearbeitung mit einem beweglichen Werkzeugträger (19) mit daran angeordneten Schneidkanten, wobei der Werkzeugträger (19) eine Bewegung der Schneidkanten auf gekrümmter Bahn ermöglicht und wobei auf einem Maschinenbett angeordnet mindestens zwei Spindelstöcke (47) in sich gegenüberliegender Anordnung und mit je zwei sich gegenüberliegend jeweils in einer Spindeltrommel (23,23') angeordneten, um eine Maschinenachse (22) drehantreibbaren, Werkstückspindeln (17,18) vorgesehen sind, wobei jeder Werkzeugträger (19) in einer dem Werkzeugwechsel dienenden Trägertrommel (20) drehantreibbar gelagert ist, die ihrerseits in Ständern (56,56') um eine Drehachse (21) drehantreibbar und in Drehrichtung positionierbar gelagert ist, wobei weiter Mittel (12,13) vorgesehen sind, die eine Winkellage des Werkzeugträgers (19) für den Arbeitsbeginn und eine Winkellage des Werkzeugträgers (19) für die Entnahme erfassen, wobei in der Winkellage für die Entnahme eine von Schneidkanten freie Zone (9,10,11) dem Werkstück (2,3) zugewandt ist, und die Steuersignale für die Be- und Entladung und mindestens den Arbeitsbeginn an die Maschinensteuerung (34) weiterleiten.

6. Maschine nach Anspruch 5, dadurch gekennzeichnet, daß die Drehachse (21) der Trägertrommel (20) parallel und in einem Abstand zur Maschinenachse (22) angeordnet ist.

7. Maschine nach Anspruch 6, dadurch gekennzeichnet, daß die Drehachse (21) der Trägertrommel (20) parallel zur Drehachse der Werkzeugträger (19) angeordnet ist.

8. Maschine nach Anspruch 7, dadurch gekennzeichnet, daß jede Trägertrommel (20) in mindestens zwei vorgegebene Winkelpositionen einfahrbar ist.

9. Maschine nach einem der Ansprüche 5 bis 8, dadurch gekennzeichnet, daß jede Spindentrommel (23;23') auf einer Welle (48) angeordnet ist, die ihrerseits im zugeordneten Spindelstock drehbar und positionierbar ist.

10. Maschine nach Anspruch 9, dadurch gekennzeichnet, daß die Wellen (48) koaxial zueinander angeordnet sind.

11. Maschine für eine Drehräumbearbeitung mit einer um eine Maschinenachse drehantreibbaren Werkstückspindel (16) und einem beweglichen Werkzeugträger (14) mit daran angeordneten Schneidkanten, wobei der Werkzeugträger eine Bewegung der Schneidkanten auf gekrümmter Bahn ermöglicht und wobei auf einem Maschinenbett (27) angeordnet mindestens zwei Spindelstöcke (29,30) in sich gegenüberliegender Anordnung und mit gemeinsamer Mittellinie der Werkstückspindeln (16) vorgesehen sind, wobei in mindestens einem der Spindelstöcke (30) ein Werkzeugträger (14) drehantreibbar gelagert ist und wobei die Mittellinie des Werkzeugträgers (14) parallel zur Mittellinie der Werkstückspindeln verläuft und wobei Mittel (12,13) vorgesehen sind, die eine Winkellage des Werkzeugträgers (14) für den Arbeitsbeginn und eine Winkellage des Werkzeugträgers (14) für die Entnahme erfassen, wobei in der Winkellage für die Entnahme eine von Schreidkanten freie Zone (9) dem Werkstück (1) zugewandt ist, und die Steuersignale für die Be- und Entladung und mindestens den Arbeitsbeginn an die Maschinensteuerung (33) weiterleiten.

12. Maschine nach einem der Ansprüche 1 bis 11, dadurch gekennzeichnet, daß die Werkstückspindel (16,17,18,83,84) in eine vorgegebene, feste Winkellage einfahrbar ist.

13. Maschine nach einem der Ansprüche 1 bis 6, dadurch gekennzeichnet, daß jeder Spindelstock (85,86) für einen Werkzeugträgers verschiebbar und positionierbar angeordnet ist.

14. Maschine nach einem der Ansprüche 1 bis 13, dadurch gekennzeichnet, daß die Drehgeschwindigkeit von Werkstückspindel und/oder Werkzeugträger veränderbar ist.

15. Maschine nach einem der Ansprüche 1 bis 14, dadurch gekennzeichnet, daß jeder Spindelstock (80,81) für eine Werkstückspindel (83,84) verschiebbar und positionierbar angeordnet ist.

## Claims

1. Machine for carrying out rotary broaching comprising a workpiece spindle drivable rotationally about a machine axis and a movable tool carrier with cutting edges arranged thereon, wherein the tool carrier enables a movement of the cutting edges on curved tracks, and wherein, arranged on a machine bed (79), are provided at least two headstocks (80, 81) in opposing relationship and with a common centreline (82) to that of the workpiece spindles (83, 84) as well as a further headstock (85, 86) for the movable tool carrier (87, 88), in which the tool carrier is mounted for driven rotation, wherein the centreline (89) of each tool carrier (87, 88) extends parallel to the centreline (82) of the workpiece spindles (83, 84), wherein each headstock for a tool carrier (87, 88) is displaceable at least parallel to the centreline (82) of the workpiece spindles (80, 81) and is arranged to be positionable, and wherein the machine comprises means (12, 13) to detect an angular position of the tool carrier (87, 88) for the beginning of working and an angular position of the tool carrier (87, 88) for the removal, wherein in the angular position for the removal a zone (9, 10, 11) free from cutting edges faces the workpiece (1,2,3,92), and the control signals for the loading and unloading and at least the beginning of working are passed on to the machine control (33, 34).

2. Machine according to claim 1, characterised in that the machine bed (79) is vertical with the centrelines (82, 89) of the spindles extending horizontally.

3. Machine according to claim 1 or 2, characterised in that the machine bed (79) is constructed as a porch.

4. Machine according to one of claims 1 to 3, characterised in that each tool headstock (85, 86) is arranged above the associated workpiece headstock (80, 81).

5. Machine for carrying out rotary broaching comprising a movable tool carrier (19) with cutting edges arranged thereon, wherein the tool carrier (19) enables a movement of the cutting edges on curved tracks, and wherein, arranged on a machine bed, are provided at least two headstocks (47) in opposing relationship and each with two workpiece spindles (17, 18) arranged opposite one another each in a spindle drum (23, 23') and driven for rotation about a machine axis (22), wherein each tool carrier (19) is mounted for driven rotation in a carrier drum (20) which serves as a tool exchanger, which is itself rotationally drivable in supports (56, 56') about an axis of rotation (21) and which is mounted to be positionable in the rotary direction, wherein further means (12, 13) are provided which detect an angular position of the tool carrier (19) for the beginning of working and an angular position of the tool carrier (19) for the removal, wherein in the angular position for the removal a zone (9, 10, 11) free from cutting edges faces the workpiece (2,3), and the control signals for the loading and unloading and at least the beginning of the working are passed on to the machine control (34).

6. Machine according to claim 5, characterised in that the axis of rotation (21) of the carrier drum (20) is parallel to and spaced from the machine axis (22).

7. Machine according to claim 6, characterised in that the axis of rotation (21) of the carrier drum (20) is parallel to the axis of rotation of the tool carrier (19).

8. Machine according to claim 7, characterised in that each carrier drum (20) can be set in at least two predetermined angular positions.

9. Machine according to one of claims 5 to 8, characterised in that each spindle drum (23, 23') is arranged on a shaft (48) which is itself rotatable and positionable in the associated headstock.

10. Machine according to claim 9, characterised in that the shafts (48) are arranged to be coaxial with each other.

11. Machine for carrying out rotary broaching comprising a workpiece spindle (16) rotatably drivable about a machine axis and a movable tool carrier (14) with cutting edges arranged thereon, wherein the tool carrier enables a movement of the cutting edges on curved tracks and wherein, on a machine bed (27), are provided at least two headstocks (29, 30) in opposing relationship and with a centreline common with that of the workpiece spindle (16), wherein a tool carrier (14) is mounted for driven rotation in at least one of the headstocks (30) and wherein the centreline of the tool carrier (14) extends parallel to the centreline of the workpiece spindle, and wherein means (12, 13) are provided which detect an angular position of the tool carrier (14) for the beginning of working and an angular position of the tool carrier (14) for the removal, wherein in the angular position for the removal a zone (9) free from cutting edges faces the workpiece (1), and the control signals for the loading and unloading and at least the beginning of working are passed on to the machine control (33).

12. Machine according to one of claims 1 to 11, characterised in that the workpiece spindle (16, 17, 18, 83, 84) can be set in a predetermined fixed angular position.

13. Machine according to one of claims 1 to 6, characterised in that each headstock (85, 86) is displaceable and positionable for one tool carrier.

14. Machine according to one of claims 1 to 13, characterised in that the rotational speed of workpiece spindle and/or tool carrier is variable.

15. Machine according to one of claims 1 to 14, characterised in that each headstock (80, 81) is displaceable and positionable for one workpiece spindle (83, 84).

## Revendications

1. Machine pour le brochage par rotation, comportant une broche porte-pièce pouvant être entraînée en rotation autour d'un axe de la machine, et un porte-outil mobile comportant des arètes de coupe disposées sur lui, étant entendu que le porte-outil permet un mouvement des arètes de coupe suivant un tracé courbe et qu'au moins deux poupées porte-broche (80, 81) sont prévues, disposées en opposition sur un banc de machine (79) et comportant une ligne médiane commune (82) avec les broches porte-pièce (83, 84), ainsi qu'au moins une autre poupée porte-broche (85, 86) pour le porte-outil mobile (87, 88), poupée danslaquelle le porte-outil est monté de façon à pouvoir être entraînée en rotation, étant entendu que la ligne médiane (89) de chaque porte-outil mobile (87, 88) a une direction parallèle à la ligne médiane commune (82) aux broches porte-pièce (83, 84), chaque poupée porte-broche pour un porte-outil (87, 88) étant disposée de façon à pouvoir coulisser et être positionnée au moins parallèlement à la ligne médiane (82) commune aux poupées porte-broche (80, 81), et étant entendu que la machine présente des moyens (12, 13) déterminant une position angulaire du porte-outil (87, 88) pour le début de l'usinage et une position angulaire du porte-outil (87, 88) pour l'enlèvement en fin d'usinage, étant entendu que, dans la position angulaire pour l'enlèvement de la pièce, une zone sans arête d'outil (9, 10, 11) est tournée vers la pièce à usiner (1, 2, 3, 92) et que les signaux de commande sont transmis à la commande de la machine (33, 34) pour le chargement et le déchargement et, au moins pour le commencement de l'usinage.

2. Machine suivant la revendication 1, caractérisée en ce que le banc (79) de la machine est disposé verticalement, les lignes médianes (82, 89) ayant une disposition horizontale.

3. Machine suivant la revendication 1 ou la revendication 2, caractérisée en ce que le banc (79) de la machine est réalisé sous la forme d'un portique.

4. Machine suivant l'une des revendications 1 à 3, caractérisée en ce que chaque poupée porte-broche (85, 86) est disposée au-dessus des poupées porte-broche (80, 81) correspondantes.

5. Machine pour le brochage par rotation, comportant un porte-outil mobile (19) avec des arêtes de coupe montées sur lui, étant entendu que le porte-outil (19) permet un mouvement des arètes de coupe suivant un tracé courbe et étant entendu que sont prévues au moins deux poupées porte-broche (47), disposées en opposition sur un banc de la machine et comportant chacune des broches porte-pièce (17, 18), disposées chaque fois en opposition dans un tambour porte-broches (23, 23') et pouvant être entraînés en rotation autour d'un axe de la machine (22), étant entendu que chaque porte-outil (19) est monté, de façon à pouvoir être entraîné en rotation, dans un tambour support (20), qui sert à l'échange d'outils et qui, de son côté, est monté dans des supports (56, 56') de façon à pouvoir être entraîné en rotation autour d'un axe de rotation (21) et être positionné dans le sens de la rotation, étant entendu que, de plus, sont prévus des moyens (12, 13) déterminant une position angulaire du porte-outil (19) pour le début de l'usinage et une position angulaire du porte-outil (19) pour l'enlèvement en fin d'usinage, étant entendu que, dans la position angulaire pour l'enlèvement de la pièce, une zone sans arète d'outil (9, 10, 11) est tournée vers la pièce à usiner (2, 3) et que les signaux de commande sont transmis à la commande de la machine (34) pour le chargement et le déchargement et, au moins pour le commencement de l'usinage.

6. Machine suivant la revendication 5, caractérisée en ce que l'axe de rotation (21) du tambour support (20) est disposé parallèlement à l'axe (20) de la machine, et à une certaine distance de lui.

7. Machine suivant la revendication 6, caractérisée en ce que l'axe de rotation (21) du tambour support (20) est disposé parallèlement à l'axe de rotation du porte-outil mobile (19) et à une certaine distance de lui.

8. Machine suivant la revendication 7, caractérisée en ce que chaque tambour support (20) peut être positionné dans au moins deux positions angulaires prédéterminées.

9. Machine suivant l'une quelconque des revendications 1 à 8, caractérisée en ce que chacun des tambours porte-broches (23; 23') est disposé sur un arbre (48) que, de son côté, on peut faire tourner et positionner dans la poupée porte-broche correspondante.

10. Machine suivant la revendication 9, caractérisée en ce que les arbres (48) sont disposés l'un par rapport à l'autre de façon à être coaxiaux.

11. Machine pour le brochage par rotation, comportant une broche porte-pièce (16) pouvant être entraînée en rotation autour d'un axe de la machine, et un porte-outil mobile (14), comportant des arètes de coupe disposées sur lui, étant entendu que le porte-outil permet un mouvement des arètes de coupe suivant un tracé courbe, et qu'au moins deux poupées porte-broche (29, 30) sont prévues, disposées en opposition sur un banc de machine (27) et comportant une ligne médiane commune (82) avec les broches porte-pièce (16), étant entendu qu'au moins dans l'une des poupée porte-broche (30) est monté un porte-outil (14) de façon à pouvoir être entraînée en rotation, et étant entendu que la ligne médiane du porte-outil (14) a une direction parallèle à la ligne médiane des broches porte-pièce, et étant entendu que sont prévus des moyens (12, 13) qui déterminent la position angulaire du porte-outil (14) pour le début de l'usinage, et une position angulaire du porte-outil (14) pour l'enlèvement de la pièce, étant entendu que, dans la position angulaire pour le démontage de la pièce, une zone sans arète d'outil (9) est tournée vers la pièce à usiner (1) et que les signaux de commande pour le chargement et le déchargement, et au moins pour le commencement de l'usinage, sont transmis à la commande de la machine (33).

12. Machine suivant l'une quelconque des revendications 1 à 11, caractérisée en ce que la broche porte-pièce (16, 17, 18, 83, 84) peut être positionnée dans une position angulaire fixe prédéterminées.

13. Machine suivant l'une quelconque des revendications 1 à 6, caractérisée en ce que chaque poupée porte-broche (85, 86) pour un porte-outil est disposée de façon à pouvoir coulisser et être positionnée.

14. Machine suivant l'une quelconque des revendications 1 à 13, caractérisée en ce que l'on peut modifier la vitesse de rotation des broches porte-pièce et/ou des porte-outil.

15. Machine suivant l'une quelconque des revendications 1 à 14, caractérisée en ce que chaque poupée porte-broche (80, 81) pour une broche porte-pièce (83, 84) est disposée de façon à pouvoir coulisser et être positionnée.
